# EUROPÄISCHE PATENTSCHRIFT

(11) **EP 2 280 221 B1**
(45) Veröffentlichungstag und Bekanntmachung des Hinweises auf die Patenterteilung: **30.10.2019**
(21) Anmeldenummer: 10171399.8
(22) Anmeldetag: 30.07.2010
(51) Int. Cl.: F21V 15/04, B60Q 1/076, F21S 41/19

(54) **Temperaturkompensierte Aufnahme eines Lichtmoduls in einem Gehäuse eines Scheinwerfers**
Temperature-compensated holder for a light module in a headlamp housing
Réception compensée en température d'un module d'éclairage dans un boîtier de phare

(30) Priorität: 31.07.2009 DE 102009035563
(43) Veröffentlichungstag der Anmeldung: 02.02.2011
(73) Patentinhaber: HELLA GmbH & Co. KGaA, 59552 Lippstadt (DE)
(72) Erfinder: Guerrero, Domingo, 33098, Paderborn (DE); Stahmeier, Martin, 33824 Werther (DE); Zehanciuc, Mario, 33142, Büren (DE)

(56) Entgegenhaltungen:
- EP-A1- 2 133 721
- DE-A1- 4 008 417
- DE-A1- 10 261 312
- DE-A1-102005 033 709
- DE-A1-102007 052 985
- DE-A1-102008 003 707

## Beschreibung

Die vorliegende Erfindung richtet sich auf einen Scheinwerfer für ein Kraftfahrzeug mit einem Gehäuse, in dem wenigstens ein Lichtmodul in einer vorgegebenen Lage aufgenommen ist, wobei das Lichtmodul über Aufnahmemittel im Gehäuse des Scheinwerfers angeordnet ist, und wobei das Gehäuse zumindest einen Befestigungspunkt aufweist, in dem das Gehäuse mit einem Rahmenelement des Kraftfahrzeugs verbunden ist.

Die Druckschrift DE 102 61 312 A1 offenbart einen verstellbaren Scheinwerfer gemäß Stand der Technik mit einer Einstellschraube aus Metall und einem relativ zum Gehäuse beweglich gelagerten Aufnahmemittel für ein Lichtmodul.

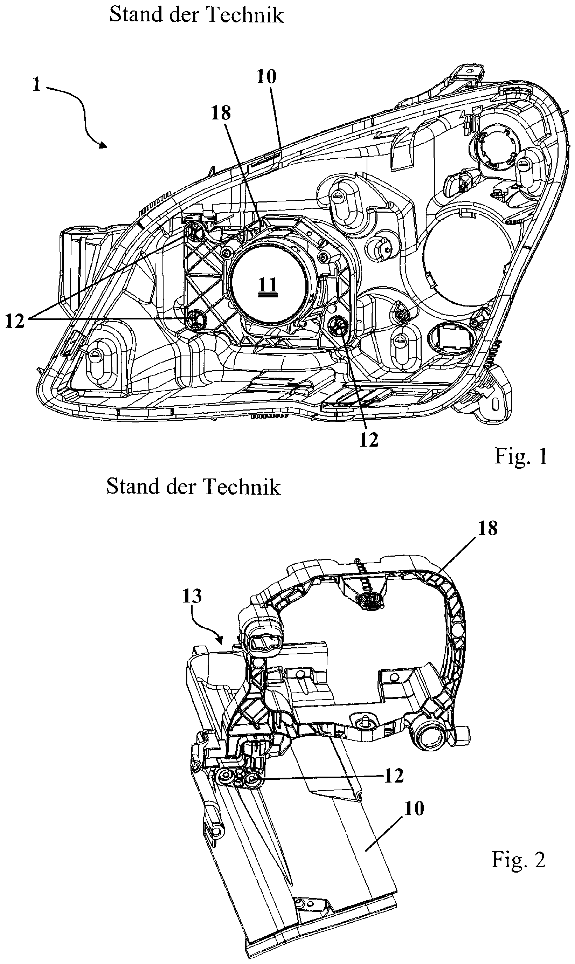

In den Figuren 1 und 2 ist ein gattungsbildender Scheinwerfer 1 gemäß dem Stand der Technik gezeigt. Der Scheinwerfer 1 ist zum Einbau in ein Kraftfahrzeug ausgeführt und weist ein Gehäuse 10 auf, in dem ein Lichtmodul 11 aufgenommen ist. Zur Aufnahme des Lichtmoduls 11 im Gehäuse 10 des Scheinwerfers 1 dient ein Tragrahmen 18. Das Lichtmodul 11 ist starr im Tragrahmen 18 eingesetzt, wobei der Tragrahmen 18 über Aufnahmemittel 12 im Gehäuse 10 aufgenommen ist. Figur 2 zeigt eine detaillierte Ansicht eines Aufnahmemittels 12 zur Anordnung des Tragrahmens 18 im Gehäuse 10. Das Aufnahmemittel 12 ist starr im Gehäuse 10 angeordnet, wobei das Gehäuse 10 über Befestigungspunkte 13 mit einem Rahmenelement des Kraftfahrzeugs starr verbunden werden kann.

Ein Lichtmodul 11 dient zur Aussendung von Licht zur Ausleuchtung des Bereiches vor dem Kraftfahrzeug, wobei das ausgesendete Licht ein Abblendlicht betreffen kann, welches eine Hell-Dunkel-Grenze aufweist. Dabei ist vorgegeben, dass die Hell-Dunkel-Grenze des Abblendlichtes einen bestimmten Winkel zur Horizontalen nicht überschreitet. Jedoch kann es auf Grund des thermischen Verhaltens des Gehäuses 10 des Scheinwerfers 1 zu einer nicht zulässigen Verlagerung der Hell-Dunkel-Grenze relativ zur Horizontalen kommen, da auf Grund des thermischen Dehnungsverhaltens des Gehäuses 10 die vorgegebene Position der Aufnahmemittel 12 verlassen wird, und eine Kippung des Tragrahmens 18 und folglich eine Kippung des Lichtmoduls 11 die Folge ist, so dass die Hell-Dunkel-Grenze ebenfalls den vorgegebenen Winkel bzw. die vorgegebene Höhe verlässt.

Es ist daher die Aufgabe der vorliegenden Erfindung, einen Scheinwerfer für ein Kraftfahrzeug zu schaffen, der die Nachteile des vorgenannten Standes der Technik vermeidet und der eine thermisch stabile Anordnung des Lichtmoduls im Gehäuse des Scheinwerfers aufweist.

Diese Aufgabe wird ausgehend von einem Scheinwerfer für ein Kraftfahrzeug gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass wenigstens eine Dehnungsbrücke vorgesehen ist, durch die zumindest ein Aufnahmemittel mit zumindest einem Befestigungspunkt mechanisch verbunden ist.

Die Erfindung geht dabei von dem Gedanken aus, die Anordnung des Aufnahmemittels mechanisch vom Gehäuse des Scheinwerfers in der Position der Anordnung zu lösen. Durch die mechanische Entkopplung des Aufnahmemittels vom Gehäuse des Scheinwerfers am Ort der Anordnung des Aufnahmemittels selbst wird erreicht, dass das Gehäuse des Scheinwerfers ein Dehnungsverhalten aufweisen kann, das die Position des Aufnahmemittels zur lagestabilen Aufnahme des Lichtmoduls von den thermischen Dehnungen des Gehäuses unbeeinflusst lässt. Durch eine erfindungsgemäße Dehnungsbrücke wird das Aufnahmemittel mit zumindest einem Befestigungspunkt mechanisch verbunden, wobei der Befestigungspunkt den Punkt wiedergibt, über den das Gehäuse des Scheinwerfers am Rahmenelement des Kraftfahrzeugs angeordnet ist. Der oder die Befestigungspunkte zur Befestigung des Gehäuses am Rahmenelement weisen im Wesentlichen eine thermisch unbeeinflusste Lage auf, so dass durch die Dehnungsbrücke die thermisch unbeeinflusste Lage auf das oder die Aufnahmemittel übertragen wird. Im Ergebnis ergibt sich eine thermisch stabile Lage des Lichtmoduls im Scheinwerfer und folglich eine stabile Lage des Lichtmoduls im Rahmenelement des Kraftfahrzeugs.

Erfindungsgemäß ist das zumindest eine Aufnahmemittel im Gehäuse beweglich aufgenommen. Zur beweglichen Aufnahme des Aufnahmemittels im Gehäuse dient ein Führungsmittel, wobei das Aufnahmemittel als Gleitelement zur gleitenden Anordnung im Führungsmittel ausgebildet ist, so dass das Aufnahmemittel im Gehäuse in einer Führungsrichtung geführt ist. Erfolgt eine Gestaltänderung des Gehäuses durch thermische Einflüsse, so kann der Bereich des Gehäuses angrenzend an oder unter dem Aufnahmemittel eine Bewegung ausführen, ohne dass das Aufnahmemittel seine Position relativ zum Rahmenelement des Kraftfahrzeugs verlässt. Das Führungsmittel kann beispielsweise in Form einer Führungsschiene innenseitig im Gehäuse des Scheinwerfers eingebracht sein, wobei das Aufnahmemittel in der Führungsschiene in wenigstens einer Führungsrichtung geführt ist. Die Führungsschiene wandert mit der thermischen Dehnung des Gehäuses mit, so dass die Führungsschiene das Aufnahmemittel in der Ebene senkrecht zur Führungsrichtung stabil anordnet.

Zur tragenden Halterung des Lichtmoduls im Gehäuse kann ein Tragrahmen vorgesehen sein, so dass das Lichtmodul über den Tragrahmen durch zumindest ein Aufnahmemittel im Gehäuse aufgenommen ist. Zwischen dem Tragrahmen und dem Aufnahmemittel kann eine Gelenkverbindung vorgesehen sein, die vorzugsweise einen Kugelkopf und eine Kugelpfanne aufweist, so dass der Kugelkopf in der Kugelpfanne aufgenommen wird. Dadurch ergibt sich der Vorteil, dass der Tragrahmen mit dem Lichtmodul in der Gelenkverbindung eine Kippbewegung ausführen kann, wobei wenigstens ein weiteres Aufnahmemittel zwischen dem Tragrahmen und dem Gehäuse des Scheinwerfers eine Verstelleinheit umfassen kann, über die die Hell-Dunkel-Grenze des ausgesendeten Abblendlichtes durch Verkippen des Tragrahmens um die Gelenkverbindung eingestellt werden kann. Die Dehnungsbrücke kann wenigstens ein Aufnahmemittel im unteren Bereich des Gehäuses mit einem Befestigungspunkt des Gehäuses im Rahmenelement verbinden, wobei bei einer Anordnung von zwei Aufnahmemitteln im unteren Bereich der Dehnungsschiene abgewandten Seite liegt. Besitzt die Dehnungsschiene einen Temperaturausdehnungskoeffizienten, der zwar deutlich kleiner ist als das Material, das das Gehäuse des Scheinwerfers oder das Aufnahmemittel bildet, so weist die Dehnungsbrücke dennoch eine - wenn auch geringe - Dehnung auf, sofern eine Temperaturerhöhung im Gehäuse des Scheinwerfers vorliegt. Ist der Verbindungspunkt zwischen der als Stahlschiene ausgeführten Dehnungsbrücke und dem Aufnahmemittel auf der der Erstreckung der Stahlschiene abgewandten Seite gelegen, so kann der Betrag der Dehnung in der Stahlschiene durch den Betrag der Dehnung im Aufnahmemittel kompensiert werden.

Es ist von besonderem Vorteil, wenn das Verhältnis zwischen dem Abstand des Verbindungspunktes zur Gelenkverbindung und der Länge der Dehnungsbrücke in Führungsrichtung derart bemessen ist, dass der Abstand zwischen der Gelenkverbindung und dem Befestigungspunkt temperaturunabhängig ist. Insbesondere kann der Quotient aus dem Temperaturausdehnungsbetrag der Dehnungsbrücke und dem des Aufnahmemittels dem Quotienten des Abstandes zwischen der Gelenkverbindung und dem Befestigungspunkt und dem Abstand zwischen dem Verbindungspunkt und dem Befestigungspunkt entsprechen. Durch diese thermosymmetrische Anordnung der Dehnungsbrücke kann bei Temperaturänderung ein konstanter Abstand zwischen der Gelenkverbindung und dem Befestigungspunkt des Scheinwerfers im Rahmenelement des Kraftfahrzeugs erreicht werden.

Vorzugsweise kann die als Stahlschiene ausgeführte Dehnungsbrücke mit dem Aufnahmemittel im Verbindungspunkt mittels eines Schraubenelementes mit dem Gehäuse verschraubt werden. Ferner kann die Stahlschiene einen Rasthaken aufweisen, der formschließend in das Gleitelement einrastbar ist, wobei die Stahlschiene mit dem Gleitelement mittels des Schraubenelementes verschraubt ist. Damit wird eine formschlüssige Verbindung zwischen der Stahlschiene und dem Gleitelement geschaffen, die auf einfache Weise montierbar und auch wieder lösbar ist.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht eines Scheinwerfers mit einem Gehäuse und einem im Gehäuse aufgenommenen Lichtmodul gemäß dem Stand der Technik,
- Fig. 2: eine Anordnung eines Tragrahmens im Gehäuse eines Scheinwerfers gemäß dem Stand der Technik,
- Fig. 3: eine Anordnung des Tragrahmens im Gehäuse eines Scheinwerfers gemäß einem Ausführungsbeispiel der vorliegenden Erfindung und
- Fig. 4: eine quer geschnittene Seitenansicht der Anordnung eines Aufnahmeelementes in einem Gehäuse mit einer Dehnungsbrücke in Gestalt einer Stahlschiene.

Die Figuren 1 und 2 zeigen einen Scheinwerfer 1 sowie die Anordnung eines Tragrahmens 18 im Gehäuse eines Scheinwerfers 1 gemäß dem Stand der Technik.

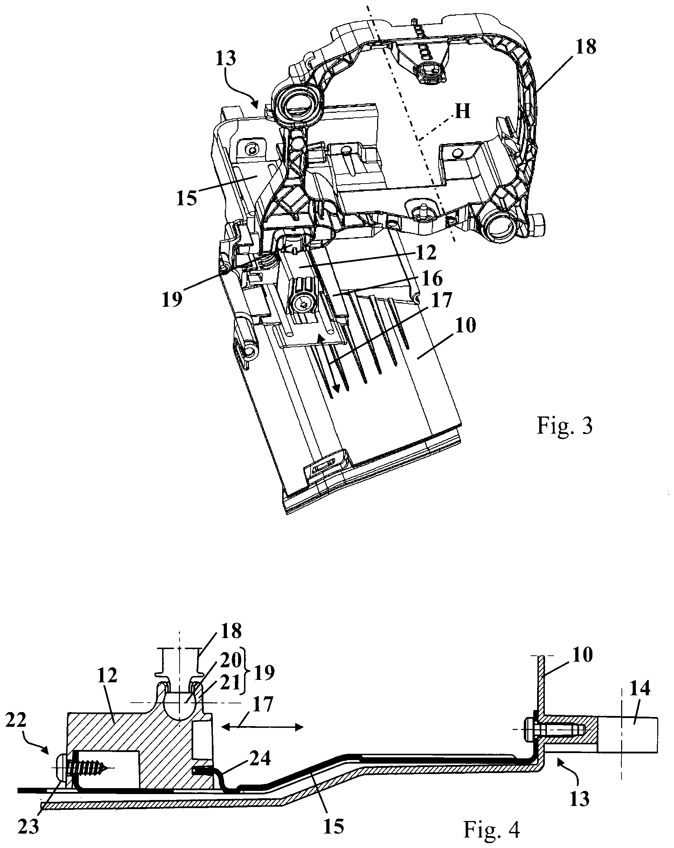

Figur 3 zeigt ein Ausführungsbeispiel der Anordnung eines Tragrahmens 18 im Gehäuse 10 eines Scheinwerfers in einer perspektivischen Ansicht. Das Gehäuse 10 ist lediglich abschnittsweise gezeigt, wobei der Abschnitt den Bodenbereich des Gehäuses 10 des Scheinwerfers in einem im Kraftfahrzeug eingebauten Zustand zeigt. Der Tragrahmen 18 dient zur Aufnahme eines Lichtmoduls, welches zur besseren Darstellung der Anordnung des Tragrahmens 18 im Gehäuse 10 nicht näher gezeigt ist. Jedoch ist die Horizontale H gezeigt, die im Wesentlichen die Richtung wiedergibt, in der das Lichtmodul Licht emittiert. Ist das durch das Lichtmodul emittierte Licht ein Abblendlicht, so weist das Abblendlicht eine Hell-Dunkel-Grenze auf, die relativ zur Horizontalen H einen vorgegebenen Winkel bzw. Winkelbereich einhalten muss. Wenn das Lichtmodul starr mit dem Tragrahmen 18 verbunden wird, wirkt sich jede Verkippung des Tragrahmens 18 im Gehäuse 10 des Scheinwerfers folglich auf das emittierte Licht und damit auf die Hell-Dunkel-Grenze des Abblendlichtes aus. Die Darstellung zeigt eine Anordnung des Tragrahmens 18 mit einer thermischen Stabilität, so dass verschiedene Temperaturen des Gehäuses 10 und der Komponenten im Gehäuse 10 keinen oder keinen wesentlichen Einfluss auf die Lage des Tragrahmens 18 haben.

Das Gehäuse 10 wird über einen Befestigungspunkt 13 an einem Rahmenelement des Kraftfahrzeugs befestigt, wobei der Befestigungspunkt 13 einen thermisch stabilen Punkt im Kraftfahrzeug darstellt. Der Befestigungspunkt 13 ist als Verbindungsmittel zwischen dem Gehäuse 10 und dem Rahmenelement des Kraftfahrzeugs zu verstehen, so dass der "Punkt" nicht im mathematischen Sinne zu verstehen ist und vorliegend vielmehr einen thermisch stabilen, ortsfesten Punkt im Kraftfahrzeug wiedergibt.

Eine thermisch unbeeinflusste, stabile Lage des Tragrahmens 18 ergibt sich dann, wenn der Abstand zwischen der Gelenkverbindung 19, die den Tragrahmen 18 mit dem Aufnahmemittel 12 verbindet, und dem Befestigungspunkt 13 konstant gehalten wird. Die Möglichkeit des konstanten Abstandes zwischen der Gelenkverbindung 19 und dem Befestigungspunkt 13 wird dadurch erreicht, dass das Aufnahmemittel 12 als Gleitelement ausgeführt ist und am Ort der Anordnung des Gleitelementes 12 vom Gehäuse 10 mechanisch entkoppelt wird. Dadurch kann das Gehäuse 10 am Ort der Anordnung des Gleitelementes 12 eine Bewegung, beispielsweise in einer Führungsrichtung 17, ausführen, ohne dass das Gleitelement 12 der thermisch verursachten Bewegung im Material des Gehäuses 10 folgt.

Ein konstanter Abstand zwischen dem Aufnahmemittel 12 und dem Befestigungspunkt 13 wird dadurch erreicht, dass eine Dehnungsbrücke 15, vorliegend in Gestalt einer Stahlschiene 15, zwischen dem Befestigungspunkt 13 und dem Aufnahmemittel 12, ausgeführt als Gleitelement 12, angeordnet wird. Die Stahlschiene 15 schafft einen konstanten Abstand zwischen dem Befestigungspunkt 13 und dem Gleitelement 12, sofern die Stahlschiene 15 erfindungsgemäß aus einem Material mit einem niedrigen Wärmeausdehnungskoeffizienten hergestellt wird. Die Stahlschiene 15 kann aus einem metallischen Werkstoff ausgebildet werden und einen Wärmeausdehnungskoeffizienten aufweisen, der beispielsweise 5-fach geringer oder sogar bis zu 10-fach geringer ausfällt als der Wärmeausdehnungskoeffizient des Materials, aus dem das Gehäuse 10 des Scheinwerfers 1 hergestellt ist.

Um eine Gleitführung des Gleitelementes 12 im Gehäuse 10 zu schaffen, derart, dass das Gleitelement 12 wenigstens in Führungsrichtung 17 innenseitig im Gehäuse 10 geführt ist, ist ein Führungsmittel 16 vorgesehen. Das Führungsmittel 16 führt die Stahlschiene 15 in Führungsrichtung 17, wobei das Gleitelement 12 mit der Stahlschiene 15 an der Stelle verbunden ist, an der die Stahlschiene 15 durch das Führungsmittel 16 geführt ist. Die Führung der Stahlschiene 15 durch das Führungsmittel 16 kann nach Art einer Schwalbenschwanz-Führung ausgebildet sein, so dass das Führungsmittel 16 einen Umgriff aufweist, durch den die Stahlschiene 15 seitlich umschlossen wird. Um eine spielfreie Anordnung der Stahlschiene 15 in Führungsmittel 16 zu erzielen, können in der Führung ferner Federelemente vorgesehen sein, die die Stahlschiene 15 gegen eine entsprechende Gleitfläche im Führungsmittel 16 andrücken, um ein mögliches Spiel der Stahlschiene 15 im Führungsmittel 16 auszuschließen.

Figur 4 zeigt eine quer geschnittene Seitenansicht des Aufnahmemittels 12 im Gehäuse 10 des Scheinwerfers 1. Das Aufnahmemittel 12 ist mit der Stahlschiene 15 verbunden. Die Verbindung umfasst in einem Verbindungspunkt 22 eine Schraubverbindung, so dass durch ein Schraubenelement 23 das Aufnahmemittel 12 mit der Stahlschiene 15 verschraubt ist. Der Verbindungspunkt 22 befindet sich auf der der Erstreckungsrichtung der Stahlschiene 15 gegenüberliegenden Seite des Aufnahmemittels 12. In der in Erstreckungsrichtung der Stahlschiene 15 gelegenen Seite des Aufnahmemittels 12 besitzt die Stahlschiene 15 einen Rasthaken 24, der in eine Rastausnehmung im Aufnahmemittel 12 eingerastet ist. Durch den Rasthaken 24 in Wirkverbindung mit dem Schraubenelement 23 wird eine formschlüssige, starre Verbindung zwischen der Stahlschiene 15 und dem Aufnahmemittel 12 geschaffen, wobei der Rasthaken 24 in der durch einen Doppelpfeil gezeigten Führungsrichtung 17 in der Rastausnehmung im Aufnahmemittel 12 verschiebbar eingerastet ist. Eine in Führungsrichtung 17 starre Verbindung zwischen der Stahlschiene 15 und dem Aufnahmemittel 12 entsteht ausschließlich im Verbindungspunkt 22, um Wärmedehnungen in der Stahlschiene 15 durch Wärmedehnungen im Aufnahmemittel 12 auszugleichen. Dadurch wird erreicht, dass die Gelenkverbindung 19 einen konstanten, von der Temperatur unabhängigen Abstand zum Befestigungspunkt 13 aufweist. Die Gelenkverbindung 19 ist durch einen Kugelkopf 20, angeformt am Tragrahmen 18, und eine Kugelpfanne 21, eingebracht im Aufnahmemittel 12, gebildet. Folglich können gewollte Verkippungen des Tragrahmens 18, beispielsweise durch ein entsprechendes Stellglied, gegenüber dem Aufnahmemittel 12 ermöglicht werden. Durch die gleitende Anordnung des Aufnahmemittels 12 im Gehäuse 10 kann sich das Gehäuse 10 in Führungsrichtung 17 ausdehnen oder zusammenziehen, was durch entsprechende Temperaturschwankungen verursacht werden kann. Durch einen sehr niedrigen Wärmeausdehnungskoeffizienten der Stahlschiene 15 bleibt die Gelenkverbindung 19 in einem konstanten Abstand zum Befestigungspunkt 13. Dehnt sich die Stahlschiene 15 in der Bildebene nach links aus, so wandert der Verbindungspunkt 22 vom Befestigungspunkt 13 weg. Bei gleichzeitiger Ausdehnung des Aufnahmemittels 12 wandert die Gelenkverbindung 19 in Führungsrichtung 17, jedoch vom Verbindungspunkt 22 weg. Die jeweiligen Dehnungsbeträge zwischen dem Verbindungspunkt 22 und dem Befestigungspunkt 13 einerseits und dem Verbindungspunkt 22 und der Gelenkverbindung 19 andererseits sind im Betrag gleich groß ausgeführt. Folglich entsteht eine thermosymmetrische Anordnung des Aufnahmemittels 12 gegenüber dem Rahmenelement 14 des Kraftfahrzeugs, so dass im Ergebnis eine stabile Lage des Tragrahmens 18 gegenüber dem Rahmenelement 14 des Kraftfahrzeugs erzielt wird.

Die vorliegende Erfindung beschränkt sich in ihrer Ausführung nicht auf das vorstehend angegebene bevorzugte Ausführungsbeispiel. Insbesondere können sämtliche Aufnahmemittel 12 zwischen dem Tragrahmen 18 und dem Gehäuse 10 des Scheinwerfers 1 durch zugeordnete Dehnungsbrücken 15 mit fahrzeugfesten Befestigungspunkten 13 verbunden sein, so dass die Anordnung des Tragrahmens 18 im Kraftfahrzeug insgesamt vom thermischen Dehnungsverhalten des Gehäuses 10 des Scheinwerfers 1 unbeeinflusst bleibt. Regelmäßig weisen Scheinwerfer 1 drei Befestigungspunkte 13 im Kraftfahrzeug auf, um eine Befestigungsebene zu bilden. Ferner ist der Tragrahmen 18 über wiederum drei Aufnahmemittel 12 im Gehäuse 10 eingebracht, wodurch eine weitere Befestigungsebene geschaffen wird. Beide auf diese Weise geschaffene Befestigungsebenen können durch jeweilige Stahlschienen-Verbindungen der einzelnen Aufnahmemittel 12 und zugeordneten Befestigungspunkten 13 in ihrer Anordnung zueinander konstant, und insbesondere thermisch unbeeinflusst gehalten werden.

### Bezugszeichenliste

- 1: Scheinwerfer
- 10: Gehäuse
- 11: Lichtmodul
- 12: Aufnahmemittel, Gleitelement
- 13: Befestigungspunkt
- 14: Rahmenelement
- 15: Dehnungsbrücke, Stahlschiene
- 16: Führungsmittel
- 17: Führungsrichtung
- 18: Tragrahmen
- 19: Gelenkverbindung
- 20: Kugelkopf
- 21: Kugelpfanne
- 22: Verbindungspunkt
- 23: Schraubenelement
- 24: Rasthaken
- H: Horizontale

## Patentansprüche

1. Scheinwerfer (1) für ein Kraftfahrzeug mit einem Gehäuse (10), in dem wenigstens ein Lichtmodul (11) in einer vorgegebenen Lage aufgenommen ist, wobei das Lichtmodul (11) über Aufnahmemittel (12) im Gehäuse (10) des Scheinwerfers (1) angeordnet ist, und wobei das Gehäuse (10) zumindest einen Befestigungspunkt (13) aufweist, in dem das Gehäuse (10) mit einem Rahmenelement (14) des Kraftfahrzeugs verbunden ist, wobei wenigstens eine Dehnungsbrücke (15) vorgesehen ist, durch die zumindest ein Aufnahmemittel (12) mit zumindest einem Befestigungspunkt (13) mechanisch verbunden ist und die Dehnungsbrücke (15) ein Material mit einem Wärmeausdehnungskoeffizienten aufweist, der niedriger ist als der Wärmeausdehnungskoeffizient des Gehäuses (10), wobei das wenigstens eine Aufnahmemittel (12) im Gehäuse (10) beweglich aufgenommen ist, wobei durch einen Bereich des Gehäuses (10) angrenzend an oder unter dem Aufnahmemittel (12) eine Bewegung ausführbar ist, wenn eine Gestaltänderung des Gehäuses (10) durch thermische Einflüsse erfolgt, ohne dass das Aufnahmemittel (12) seine Position relativ zum Rahmenelement (14) des Kraftfahrzeugs verlässt,
**dadurch gekennzeichnet, dass** die Dehnungsbrücke (15) als Stahlschiene (15) ausgeführt ist.

2. Scheinwerfer (1) nach Anspruch 1, **dadurch gekennzeichnet, dass** ein Führungsmittel (16) vorgesehen ist und wobei das Aufnahmemittel (12) als Gleitelement (12) zur gleitenden Anordnung im Führungsmittel (16) ausgebildet ist, so dass das Gleitelement (12) im Gehäuse (10) in einer Führungsrichtung (17) geführt ist.

3. Scheinwerfer (1) nach einem der Ansprüche 1 oder 2, **dadurch gekennzeichnet, dass** ein Tragrahmen (18) zur tragenden Halterung des Lichtmoduls (11) im Gehäuse (10) vorgesehen ist, sodass das Lichtmodul (11) über den Tragrahmen (18) durch zumindest ein Gleitelement (12) im Gehäuse (10) aufgenommen ist.

4. Scheinwerfer (1) nach Anspruch 3, **dadurch gekennzeichnet, dass** zwischen dem Tragrahmen (18) und dem Gleitelement (12) eine Gelenkverbindung (19) vorgesehen ist, die vorzugsweise einen Kugelkopf (20) und eine Kugelpfanne (21) aufweist, sodass der Kugelkopf (20) in der Kugelpfanne (21) aufgenommen ist.

5. Scheinwerfer (1) nach einem der Ansprüche 1 bis 4, **dadurch gekennzeichnet, dass** die Dehnungsbrücke (15) ein Material mit einem Wärmeausdehnungskoeffizienten aufweist, der niedriger ist als der Wärmeausdehnungskoeffizient des Gleitelementes (12).

6. Scheinwerfer (1) nach einem der Ansprüche 2 bis 5, **dadurch gekennzeichnet, dass** die Dehnungsbrücke (15) mit dem Gehäuse (10) im Befestigungspunkt (13) verbunden ist, wobei die Erstreckungsrichtung der Stahlschiene (15) im Wesentlichen der Führungsrichtung (17) zur Führung des Gleitelementes (12) im Führungsmittel (16) entspricht.

7. Scheinwerfer (1) nach einem der Ansprüche 2 bis 6, **dadurch gekennzeichnet, dass** die Dehnungsbrücke (15) in einem Verbindungspunkt (22) mit dem Gleitelement (12) verbunden ist, wobei der Verbindungspunkt (22) auf der der Erstreckung der Dehnungsbrücke (15) abgewandten Seite liegt.

8. Scheinwerfer (1) nach Anspruch 7, **dadurch gekennzeichnet, dass** das Verhältnis zwischen dem Abstand des Verbindungspunktes (22) zur Gelenkverbindung (19) und der Länge der Dehnungsbrücke (15) in Führungsrichtung (17) derart bemessen ist, dass der Abstand zwischen der Gelenkverbindung (19) und dem Befestigungspunkt (13) temperaturunabhängig ist.

9. Scheinwerfer (1) nach einem der Ansprüche 6 bis 8, **dadurch gekennzeichnet, dass** die Stahlschiene (15) mit dem Gleitelement (12) im Verbindungspunkt (22) mittels eines Schraubenelementes (23) mit dem Gehäuse (10) verschraubt ist.

10. Scheinwerfer (1) nach einem der Ansprüche 6 bis 9, **dadurch gekennzeichnet, dass** die Stahlschiene (15) einen Rasthaken (24) aufweist, der formschließend in das Gleitelement (12) einrastbar ist, wobei die Stahlschiene (15) mit dem Gleitelement (12) mittel eines Schraubenelementes (23) verschraubt ist.

11. Scheinwerfer (1) nach einem der Ansprüche 2 bis 10, **dadurch gekennzeichnet, dass** das Lichtmodul (11) Licht mit einer Hell-Dunkel-Grenze emittiert, die einen vorbestimmten Winkel zur Horizontalen (H) aufweist, wobei die Erstreckungsrichtung der Dehnungsbrücke (15) im Wesentlichen in Richtung zur Horizontalen (H) verläuft, und wobei durch eine ortsfeste Anordnung des Gleitelementes (12) relativ zum Befestigungspunkt (13) der vorbestimmte Winkel der Hell-Dunkel-Grenze zur Horizontalen (H) temperaturunabhängig ist.

## Claims

1. Headlight (1) for a motor vehicle with a housing (10), in which at least one light module (11) is mounted in a specified position, where the light module (11) is arranged by means of a mounting device (12) in the housing (10) of the headlight (1), and where the housing (10) has at least one attachment point(13), in which the housing (10) is connected to a frame element (14) of the motor vehicle, where at least one extension bridge (15) is provided for by means of which at least one mounting device (12) is mechanically connected to at least one attachment point (13)
and the extension bridge (15) is of a material with a thermal expansion coefficient that is lower than the thermal expansion coefficient of the housing (10),
where
the at least one mounting device (12) is mounted in the housing (10) such that it can be moved, where a movement can be executed by one area of the housing (10)
adjacent to or below the mounting device (12) if there is a change in the shape of the housing (10)
caused by thermal influences,
without the mounting device (12) leaving its position relative to the frame element (14) of the motor vehicle,
**characterized in that** the extension bridge (15) is implemented as a steel rail (15).

2. Headlight (1) in accordance with Claim 1, **characterized in that** a guide (16) is provided for and where the mounting device (12) is formed as a sliding component (12) for sliding arrangement within the guide (16), such that the sliding component (12) is guided in a guiding direction (17) within the housing (10).

3. Headlight (1) in accordance with one of Claims 1 or 2, **characterized in that** a carrier frame (18) is provided as a supporting mount for the light module (11) within the housing (10), such that the light module (11) is mounted via the carrier frame (18) by at least one sliding component (12) within the housing (10).

4. Headlight (1) in accordance with Claim 3, **characterized in that** an articulated joint (19) is provided for between the carrier fame (18) and the sliding component (12), which articulated joint preferentially has a ball head (20) and a ball socket (21), such that the ball head (20) is mounted in the ball socket (21).

5. Headlight (1) in accordance with one of Claims 1 through 4 **characterized in that**
the extension bridge (15) is of a material with a thermal expansion coefficient that is lower than the thermal expansion coefficient of the sliding component (12).

6. Headlight (1) in accordance with one of Claims 2 through 5, **characterized in that** the extension bridge (15) is connected with the housing (10) within attachment point (13), where the extension direction of the steel rail (15) essentially corresponds to the guiding direction (17) for guiding the sliding component (12) within the guide (16).

7. Headlight (1) in accordance with one of Claims 2 through 6 **characterized in that** the extension bridge (15) is connected with the sliding component (12) within a connection point (22), where the connection point (22) is on the side facing away from the extension of the extension bridge (15)

8. Headlight (1) in accordance with Claim 7, **characterized in that** the ratio between the distance from the connection point (22) to the articulated joint (19) and the length of the extension bridge (15) in the guiding direction (17) is dimensioned such that the distance between the articulated joint (19) and the attachment point (13) is independent of temperature.

9. Headlight (1) in accordance with one of Claims 6 through 8 **characterized in that** the steel rail (15) with the sliding component (12) is screwed to the housing (10) within the connection point (22) by means of a screw element (23).

10. Headlight (1) in accordance with one of Claims 6 through 9 **characterized in that** the steel rail (15) has a locking hook (24) that can latch into the sliding component (12) to complete the shape, where the steel rail (15) is screwed to the sliding component (12) by means of a screw element (23).

11. Headlight (1) in accordance with one of Claims 2 through 10, **characterized in that** the light module (11) emits light with a light-dark cut-off line that has a predetermined angle to horizontal (H), where the extension direction of the extension bridge (15) runs essentially in the direction of horizontal (H) and where the stationary arrangement of the sliding component (12) in relation to the attachment point (13) of the predefined angle of the light-dark cut-off line to the horizontal (H) is independent of temperature.

## Revendications

1. Phare (1) pour un véhicule avec un boîtier (10), dans lequel au moins un module lumineux (11) est logé dans une position prédéfinie, sachant que le module lumineux (11) est disposé via des moyens de réception (12) dans le boîtier (10) du phare (1) et que le boîtier (10) présente au moins un point de fixation (13), le boîtier (10) étant relié à un élément de châssis (14) du véhicule, et où au moins un pont de dilatation (15) est prévu, par l'intermédiaire duquel au moins un moyen de réception (12) est relié mécaniquement à au moins un point de fixation (13)
et le pont de dilatation (15) est fabriqué dans un matériau ayant un coefficient de dilatation thermique inférieur à celui du boîtier (10),
sachant qu'au
moins un moyen de réception (12) est logé de façon mobile dans le boîtier (10), où un mouvement peut être effectué par une zone du boîtier (10)
en bordure du
moyen de réception (12) ou sous ce dernier, si une modification de la forme du boîtier (10)
a lieu sous des influences thermiques,
sans que le moyen de réception (12) ne quitte sa position par rapport à l'élément de châssis (14) du véhicule,
**caractérisé en ce que** le pont de dilatation (15) est construit sous la forme d'un rail d'acier (15).

2. Phare (1) selon la revendication 1, **caractérisé en ce qu'un** moyen de guidage (16) est prévu et sachant que le moyen de réception (12) est conçu comme un élément coulissant (12) pour une configuration coulissante dans le moyen de guidage (16), de sorte que l'élément coulissant (12) est guidé dans le boîtier (10) dans une direction de guidage (17).

3. Phare (1) selon l'une des revendications 1 ou 2, **caractérisé en ce qu'un** cadre porteur (18) est prévu pour le support du module lumineux (11) dans le boîtier (10), de sorte que le module lumineux (11) est logé par l'intermédiaire d'au moins un élément coulissant (12) dans le boîtier (10), via le cadre porteur (18).

4. Phare (1) selon la revendication 3, **caractérisé en ce qu'**un raccord articulé (19) est prévu entre le cadre porteur (18) et l'élément coulissant (12), présentant de préférence une tête sphérique (20) et un coussinet sphérique (21), de sorte que la tête sphérique (20) est logée dans le coussinet sphérique (21).

5. Phare (1) selon l'une des revendications 1 à 4 **caractérisé en ce que**
le pont de dilatation (15) est fabriqué dans un matériau ayant un coefficient de dilatation thermique inférieur à celui de l'élément coulissant (12).

6. Phare (1) selon l'une des revendications 2 à 5, **caractérisé en ce que** le pont de dilatation (15) est relié au boîtier (10) au niveau du point de fixation (13), sachant que la direction d'extension du rail d'acier (15) correspond essentiellement à la direction de guidage (17) pour le guidage de l'élément coulissant (12) dans le moyen de guidage (16).

7. Phare (1) selon l'une des revendications 2 à 6, **caractérisé en ce que** le pont de dilatation (15) est relié à l'élément coulissant (12) au niveau d'un point de connexion (22), sachant que le point de connexion (22) se trouve du côté opposé à l'extension du pont de dilatation (15)

8. Phare (1) selon la revendication 7, **caractérisé en ce que** le rapport entre la distance « point de connexion (22)-raccord articulé (19) » et la longueur du pont de dilatation (15) dans la direction de guidage (17) est calculé de sorte que la distance entre le raccord articulé (19) et le point de fixation (13) dépende de la température.

9. Phare (1) selon l'une des revendications 6 à 8, **caractérisé en ce que** le rail d'acier (15) fixé à l'élément coulissant (12) au niveau du point de connexion (22) est vissé au boîtier (10) au moyen d'une vis (23).

10. Phare (1) selon l'une des revendications 6 à 9, **caractérisé en ce que** le rail d'acier (15) présente un crochet d'encliquetage (24) pouvant s'encliqueter avec ajustement de forme dans l'élément coulissant (12), sachant que le rail d'acier (15) est vissé à l'élément coulissant (12) au moyen d'une vis (23).

11. Phare (1) selon l'une des revendications 2 à 10, **caractérisé en ce que** le module lumineux (11) émet une lumière avec une ligne de coupure clair/obscur présentant un angle prédéterminé par rapport à l'horizontale (H), sachant que la direction d'extension du pont de dilatation (15) se fait essentiellement dans le sens horizontal (H), et sachant que l'angle prédéterminé de la ligne de coupure clair/obscur par rapport à l'horizontale (H) dépend de la température du fait d'une disposition fixe de l'élément coulissant (12) par rapport au point de fixation (13).
